# EUROPEAN PATENT SPECIFICATION

(11) **EP 0 574 492 B1**
(45) Date of publication and mention of the grant of the patent: **12.05.1999**
(21) Application number: 92906780.9
(22) Date of filing: 03.02.1992
(51) Int. Cl.: A01N 57/00, A01N 25/04, A01N 25/22

(54) **STABILIZATION OF MICROEMULSIONS USING HYDROPHOBIC ACID BUFFERS**
STABILISIERUNG VON MIKROEMULSIONEN DURCH VERWENDUNG HYDROPHOBER SAURER PUFFER
STABILISATION DE MICROEMULSIONS EN UTILISANT DES TAMPONS D'ACIDE HYDROPHOBE

(30) Priority: 12.02.1991 US 654250; 16.10.1991 US 777032; 16.10.1991 US 777033
(43) Date of publication of application: 22.12.1993
(73) Proprietor: ISP INVESTMENTS INC., Wilmington, Delaware 19801 (US)
(72) Inventor: NARAYANAN, Kolazi, S., Palisades Park, NJ 07650 (US); CHAUDHURI, Ratan, K., Butler, NJ 07405 (US); DAHANAYAKE, Manilal, Princeton Junction, NJ 08550 (US)
(74) Representative: Ford, Michael Frederick
(86) International application number: US9200951
(87) International publication number: WO9213454

(56) References cited:
- EP-A- 0 102 003
- EP-A- 0 391 168
- WO-A-88/00184
- DE-A- 2 128 225
- DE-A- 3 707 711
- FR-A- 2 187 227
- US-A- 4 198 410
- US-A- 4 595 679
- B.CROSS & H.B.SCHER 'Pesticide Formulations, Innovations and Developments. ACS symp. series 371' 1988 , AMERICAN CHEMICAL SOCIETY , WASHINGTON, DC, US * Chapter 15: Effects of Solvent on Microemulsion Phase Behaviour * * See in particular, page 186 line 4 to page 188 line 28 *
- CHEMICAL ABSTRACTS, Volume 86, No. 5, issued 07 August 1977 (Columbus, Ohio, USA), COPES et al., "Low-molecular-weight complexes of lactams and polyhydroxy aromatic compounds", see page 521, column 2, the Abstract No. 43555C.
- CHEMICAL ABSTRACTS, Volume 109, 100.6, issued 09 July 1988 (Columbus, Ohio, USA), LOGIN et al., "Surface-active lactams", see page 117, column 1, the Abstract No. 131269M.

## Description

### BACKGROUND OF THE INVENTION

### I. Field of the Invention

The invention relates to a delivery system for agriculturally active chemicals. More particularly, the invention relates to a microemulsion of a difficult to dissolve agricultural chemical and concentrates for producing such microemulsions.

### II. Definitions

As used herein, the following terms have the meanings indicated:
(a) "macroemulsion" means an emulsion of water in oil or oil in water wherein the interior phase is in the form of visually discernable droplets and the overall emulsion is cloudy, and wherein the droplet diameter is greater than about 100 millimicrons.
(b) "microemulsion" means an oil in water or water in oil, transparent thermodynamically stable dispersion of two or more immiscible liquids wherein the dispersed phase consists of small droplets with diameters in the range of about 10 to 100 millimicrons. Such microemulsions are clear and contain at least about 80% by weight water.
(c) "clear" or "transparent" as applied to a microemulsion means that the composition appears as a single phase without any particulate or colloidal material or a second phase being present when viewed by the naked eye.
(d) "substantially insoluble" or "insoluble" means that for all practical purposes, the solubility of the compound in water is insufficient to make the compound practicably usable in an agricultural end use without some modification either to increase its solubility or dispersability in water, so as to increase the compound's bioavailability or avoid the use of excessively large volumes of solvent.
(e) high degree of loading in the concentrate means an agriculturally active ingredient content of at least about 4 percent by weight.
(f) the term "agriculturally active chemical or ingredient" (AAC) means compounds and mixtures thereof which can be used as agricultural fertilizers, nutrients, plant growth accelerants, herbicides, plant growth controlling chemicals, and chemicals which are effective in killing plants, insects, microorganisms, fungi, bacteria and the like which are commonly referred to as insecticides, bactericides, fungicides, nematocides, fumigants, synergists, i.e., compounds which when used in conjunction with other AAC's enhance their activity and the like, as well as any other chemicals having properties which are suitable for agricultural uses in terms of application to plants or domestic uses for controlling insects and pests.
(g) the term "unstable" when applied to an agriculturally active chemical means that the chemical is subject to degradation or deterioration when mixed with water.
(h) the term "buffering effective amount" means an amount of hydrophobic acid sufficient to buffer the mixture to a pH so as to minimize the hydrolysis of the AAC.
(i) the term "cold temperature stability" in connection with a microemulsion means that the microemulsion remains clear for periods of at least one month at 2-3°C.

### BACKGROUND OF THE INVENTION

Agricultural chemicals are most preferably applied in the form of agueous emulsions, solutions, or suspensions. Occasionally, they may also be applied in the form of a dust wherein the active ingredient is adsorbed onto or mixed with a finely divided inert carrier material, such as, china clay, or the like. With such powdered or dust compositions, drift due to wind is a problem and consequently, liquid formulations are preferred.

One of the problems with such liquid formulations is the fact that chemicals having agricultural activity often exhibit extreme insolubility in water. This results in their having to be dissolved either in organic solvents or utilized in the form of emulsions or suspensions. With respect to the use of organic solvents, these are generally disadvantageous from an environmental and cost viewpoint. Particularly, such organic chemicals may exhibit toxicity or side-effects which may be adverse to the effect of the agricultural chemical itself or to the subsequent fruit or vegetable produced in the particular agricultural use. This toxicity may also be disadvantageous with respect to handling.

When attempts are made to provide emulsified or suspension formulations, difficulties are encountered with respect to providing a desirably high concentration of the agriculturally active ingredient. Thus, when such agriculturally active chemicals are formulated into a macroemulsion (sometimes referred to herein as an emulsion), it is difficult to maintain the emulsified state. This, in turn, creates problems in maintaining a uniform formulation, particularly, when the formulation is diluted with water for application to the plants.

An attempt to provide concentrates of agriculturally useful chemicals for producing macroemulsions is disclosed in South African Patent Application No. 695,393, filed July 25, 1969. This application is directed to the formulation of a concentrate of substantially water-insoluble pesticides for agricultural use. The pesticides, either in oil or solid form, are mixed with pyrrolidones having a hydrogen or a lower alkyl group containing from 1 to 4 carbon atoms attached to the nitrogen atom of the pyrrolidone ring. The application discloses that concentrated solutions of difficult to dissolve pesticides could be formulated and that such concentrates exhibited good stability. The concentrates utilized are those containing the pesticidal active ingredient, the particular lower alkyl pyrrolidone, a co-solvent which is usually a common organic solvent, such as, an aromatic including xylene, methylated and polyalkylated naphthalenes and aliphatic solvents, and a dispersing or emulsifying agent, such as, a surfactant, including polyoxyethylene alkylphenols, polyoxyethylene fatty esters, polyoxyethylene sorbitan fatty esters which may be blended with oil-soluble sulfonates, calcium and aminosulfonate salts, and the like.

This prior art does not offer a solution to the problem arising from the difficulty in maintaining the stability of the emulsion after the concentrate is diluted with water. Consequently, unless the diluted form of the concentrate is used immediately after emulsification, it is difficult to provide a stable diluted formulation for application to the plants, soil, pests, and the like.

U.S. Patent No. 4,798,837 discloses an emulsifiable concentrate of the pesticidal compound (CGA) :

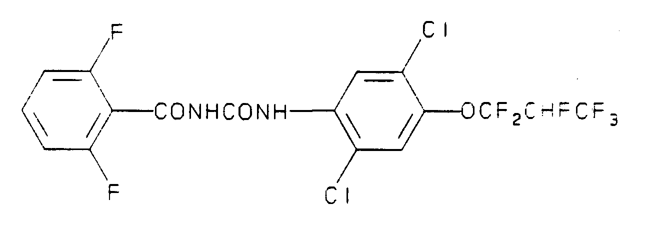

This active concentrate contains 10% of the active ingredient using 30% cyclohexanone as the solvent. However, cyclohexanone is highly toxic. For such agricultural uses, it is desirable to avoid the use of toxic solvents, including those of Lists 1 and 2 of 40 C.F.R. 154.7 dated April 22, 1987, which includes inerts of toxicological concern and solvents having high flash points, as well as to increase the amount of the agriculturally active material in the concentrate. Moreover, many organic solvents which have been used in the past, even those exhibiting relatively low toxicities, are not biodegradable and thus remain as a pollutant.

U.S. Patent Application Serial Nos. 546,014, filed, June 28, 1990, 505,030, filed April 5, 1990, and 07/448,707, filed December 11, 1989, have provided solutions to the problem of providing stable macroemulsions of insoluble agricultural chemicals in agueous systems. This is accomplished by the use of long and short chain alkyl lactams for formation of emulsifiable concentrates of agricultural chemicals. Also see U.S. patent application Serial No. 257,596, filed October 14, 1988, the contents of which are incorporated herein by reference, which discloses the use of long chain alkyl lactams to prepare emulsifiable concentrates of agriculturally active ingredients, e.g., herbicides, fungicides, pesticides, and the like, which on dilution with water, form stable macroemulsions.

While these patent applications disclose the preparation of emulsions of a wide variety of agriculturally active chemicals which are normally highly insoluble in water, the emulsions produced from all of these prior art concentrates are macroemulsions. The macroemulsions which result from their dilution with water, while relatively stable, may, at some point in time, settle out into two or more phases.

It is desirable, however, to provide compositions which will deliver effective amounts of insoluble agriculturally active compounds which exhibit improved stability with respect to the emulsion. In addition, it is desired to provide increased chemical stability for such agricultural compounds.

It is also desirable to increase the efficacy of a given agricultural compound relative to its loading content. It has been theorized that microemulsions can improve the efficacy of agriculturally active compounds relative to equivalent levels of the same compound in a macroemulsion composition. See Skelton, P.R., Munk, B.H., and Collins, H.M., "Formulation of Pesticide Microemulsions", Pesticide Formulations and Application Systems; 8th Volume, ASTM STP 980, D.A. Hovde and G.B. Beestman, Eds., American Society for Testing and Materials, Philadelphia, 1988. See also U.S. Patent 3,954,967, and Canadian Patent 1025687. For a discussion of Microemulsions, see Microemulsions, Theory and Practice, Leon M. Prince, Academic Press, 1977 and Microemulsions-Properties Novel Chemistry BH Robinson, Chemistry in Britain 26 (1990), page 342.

DE-A-2128225 discloses solution concentrates of agricultural chemicals. The document teaches that certain agricultural chemicals should be used jointly with a mixture of N-methyl pyrrolidone and dimethyl formamide in a ratio ranging from 9:1 to 1:9. The mixture should also contain one or more emulsifiers and/or surfactants. The document teaches that these concentrates may be diluted with water for spraying or used without dilution or diluted with an organic solvent if they are to be used in an ultra-low-volume process. The final paragraph in the description states that the aqueous compositions for spraying formulated by dilution may depending on the emulsifier and the water hardness, form clear to strongly turbid pseudo-solutions.

EP-A-102003 describes stabilised herbicide compositions which may be in the form of an emulsion (but microemulsions are not mentioned) and which may include a variety of materials as stabilising agents. The stabilising agents are mentioned include a variety of acidic materials including inorganic acids and water-soluble organic acids.

EP-A-391168 describes N-alkyl lactam as crystallisation inhibitors in aqueous formulations of specified agricultural fungicides. It is briefly mentioned that stabilisation against cold can be achieved by using materials known for that purpose including glycerol and propylene glycol.

We have discovered microemulsions which can be used to place highly water insoluble agriculturally active compounds in a state which is essentially equivalent to a dissolved state, which microemulsions exhibit prolonged stability.

More particularly, we have discovered a highly stable composition composed of a water insoluble agriculturally active ingredient, a surfactant, a lactam having the formula: 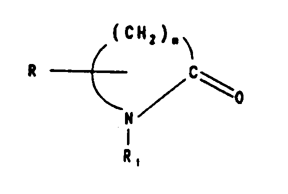 wherein R is hydrogen or branched or straight chained alkyl having from 1 to 16 carbon atoms and R₁ is branched or straight chained alkyl having from 1 to 16 carbon atoms, with the provision that the sum of the carbon atoms in R and R₁ is less than or equal to 16; and n is 3, 4, or 5; and at least about 80 percent by weight water, and wherein the specific agriculturally active ingredient, surfactant, and lactam and amounts of each are such that composition is in the form of a microemulsion.

Of importance with the microemulsions of the present invention is the fact that even though they contain large amounts of water, they exhibit a long shelf life in the microemulsion form. This is of special advantage for consumer end uses, e.g., household uses, domestic pest control, and those end uses wherein dilution of a concentrate at the site is unfeasible or undesirable. In addition, the inventive compositions do not contain any materials which are disadvantageous from an environmental point of view, e.g., toxic solvents and the like.

However, certain AAC's are known to be unstable under certain conditions, for example, they may hydrolyze in water, e.g., carbamates, pyrethroids or esters, amides, phosphate esters, thiophosphates esters, and the like. Typical of these are hydramethylnon, carbaryl, and the like. Generally, for such a compound, stability of four hours has been considered satisfactory since the diluted material would, as a practical matter, have to be used shortly after dilution. However, this means that these compounds cannot be stored for prolonged periods of time.

In addition, we have discovered that for those AAC's which are normally unstable in water, i.e., subject to hydrolysis, a highly stable microemulsion can be obtained by including in the above mixture a buffering effective amount of a hydrophobic buffering acid.

Also, in certain geographic areas, it is also desirable that compositions maintain the microemulsion state at temperatures below 10°C, and generally, as low as 3°C. Ordinarily, it has been observed that such microemulsions become unstable, as evidenced by visible cloud of the otherwise transparent liquid as the temperature is decreased below about 10°C.

Also, we have found that the cold temperature stability of such AAC's can be improved by the addition to the above-defined mixture of a cold temperature effective stabilizing amount of a polyhydric alcohol.

In the drawing:

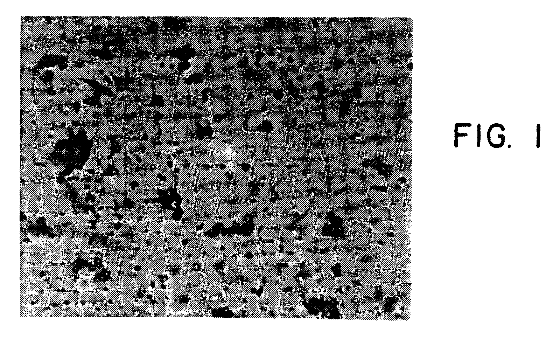

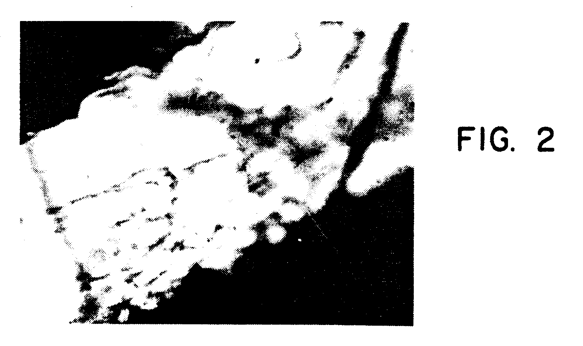

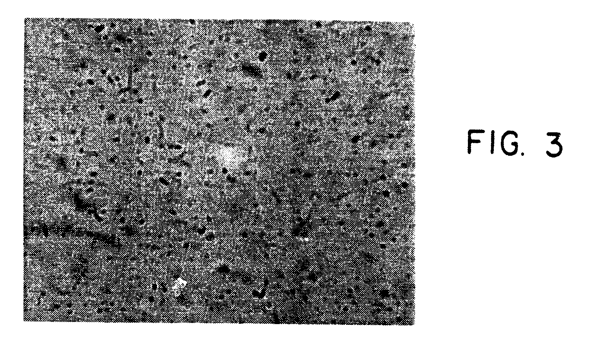

Figures 1, 2 and 3 are photomicrographs of microemulsions of Carbaryl (1-naphthyl-N-methylcarbamate).

Agriculturally active chemicals which can be used with the present invention normally take the form of water-immiscible or oily liquids and/or solids and include insecticides, such as, cyclo compounds, carbamates, animal and plant derivatives, synthetic pyrethroids, diphenyl compounds, non-phosphates, organic phosphates, thiophosphates, and dithiophosphates. (See Agricultural Chemicals, Book I, Insecticides, 1989 Revision by W.T. Thomson, Thomson Publications.)
- cyclocompounds:: 6,7,8,9,10,10-hexachloro-1,5,5a,6,9,9a-hexahydro-6,9-methano-2,4,3-benzodioxathiepin-3-oxide
- carbamates:: 2-isopropyl phenyl-N-methyl carbamate;
2-(1,3-dioxolan-2yl) phenylmethyl carbamate;
2,3-isopropylidine dioxyphenyl methyl carbamate;
- Carbaryl:: 1-naphthyl-N-methylcarbamate
- animal and plant derivatives:: chlorinated hydrocarbons derived from Southern pine; naturally occurring lactone glycoside;
- synthetic pyrethroids:: (±) α-cyano-3-phenoxybenzyl (±) cis, trans 3-(2,2-dichlorovinyl)-2,2-dimethyl cyclopropane carboxylate;
(RS)-3-allyl-2-methyl-4-oxocyclopent-2-enyl (1RS)-cis,trans-chrysanthemate;
3-phenoxybenzyl (1RS)-cis,trans-3-(2,d-dichloroyinyl)-2,2-dimethylcyclopropanecarboxylate;
3,4,5,6-tetrahydrophthalimidomethyl (±)-cis,trans-chrysanthemate);
5-[2-(2-*butoxyethoxy)ethoxymethyl]-6-propyl-1,3-benzodioxole;
(RS)-α-cyano-3-phenoxybenzyl 2,2,3,3-tetramethylcyclopropanecarboxylate;
(±) cyano (3-phenoxyphenyl methyl (±)-4-(difluoromethyoxy) α-(1-methylethyl) benzene acetate;
- phenoxy compounds and non-phosphate:: 2,2-bis(p-methoxy phenyl)1,1,1, trichloroethane;
1,3,5,tri-n-propyl-1,3,5-triazine-2,4,6 (1H,3H,5H) trione;
ethyl (2E, 4E)-3,7,11-trimethyl-2,4-dodeca dienoate;
1-[4-)2-chloro-α,α,α-trifluoro-p-tolyloxy)-2-fluorophenyl]-3-(2,6-difluorobenzoyl)urea; 1-decycloxy 4-[(7-oxa-oct-4-ynyl)]-oxybenzene;
- organic phosphates:: dimethyl phosphate ester of 3-hydroxy-N,N-dimethyl-cis-crotonamide;
2-chloro-1-(2,4-dichloro phenyl) vinyl diethylphosphate;
4-(methyl thio) phenyl dipropyl phosphate;
- thiophosphates:: 0,0-diethyl-0-4-nitrophenyl phosphorothioate;
0,0-diethyl-0-(2,isopropyl-6-methyl-5-pyrimidinyl) phosphorothioate;
2-diethylamino-6-methyl pyrimidine-4-yl dimethyl phosphorothioate;
- dithiophosphates and others:: 0,0-dimethyl phosphorodithioate ester of diethylmercapto succinate;
0-ethyl-S-phenyl ethyl phosphorodithioate;
5,5-dimethylperhydropyrimidin-2-one 4-trifluoromethyl-α-(4-trifluoromethylstyryl)-cinnamylidenehydrazone (hydramethylnon).

* this compound is a known synergist for synthetic pyrethroids

Typical herbicides include phenoxy compounds, benzoic, acetic, and phthalic acids, aniline derivatives, nitriles, amides, acetamides, anilides, carbamates, thiocarbamates, and heterocyclic nitrogen derivatives, e.g., triazines, pyridines, pyridazones, picolinic acid, and urea derivates and phosphates. (See Agricultural Chemicals, Book II, Herbicides, 1986-87 Edition, W.T. Thomson, Thomson Publications, Fresno, CA 93791.)

### Exemplary of the above compounds are:

- phenoxy compounds:: 2,4-dichlorophenoxy acetic acid;
2,4,5-trichloro phenoxyacetic acid;
4-(2,4-dichlorophenoxy) butyric acid;
S-ethyl 2 methyl-4-chlorophenoxythioacetate;
2-methyl-4-chloro-phenoxy acetic acid;
methyl 5-(2,4-dichloro-phenoxy)-2-nitrobenzoate;
- benzoic and acetic acids of phthalic compounds:: 3,6-dichloro-o-anisic acid;
4-chloro-2-oxo benzothiazolin-3-yl acetic acid;
N-1-Naphthyl-phthalamic acid;
- nitriles and aniline derivatives:: 3-5-dibromo-4-hydroxybenzo-nitrile;
α,α,α,trifluoro-2,6-dinitro-N, N-dipropyl-p-tolinidine;
N-(1-ethylpropyl)-2,6-dinitro-3,4-xylidine;
- amides, acetamides, anilides:: N,N-diethyl-2-(1-naphthalenyl oxy)-propionamide;
2,6-dimethyl-N-2' methoxy-ethylchloro-acetanilide;
3',4'-dichloro-propionanilide;
α-chloracetic-N-(3,5,5-trimethylcyclohexen-1-yl)-N-isopropylamide;
4-benzyl-N-isopropyl trimethyl acetamide;
thiocarbamates: S-Ethyl dipropyl thiocarbamate;
- urea derivatives:: 3-(5-tert-butyl-3-isoxazoyl)-1,1-dimethyl urea;
N-(2,6-trifluoro-benzoyl)-N'-[2,5-dichloro-4-(1,1,2,3,3,3-hexafluoropropyloxy) phenyl] urea;
- pyrrolidone derivatives:: 1-(m-trifluoro methyl phenyl)-3-chloro-4-chloromethyl-2-pyrrolidone;
- amino acid derivatives:: methyl N-benzoyl-N-(3-chloro-4-fluorophenyl)-DL alarinate;
N-chloroacetyl-N-(2,6-diethyl phenyl)-glycine ethyl ester;
- carbamates:: isopropyl-m-chlorocarbanilate; 3-ethoxy (carbonyl aminophenyl)-N-phenyl carbamate;
- heterocyclics:: 4-amino-3,5-dichloro-6-fluoro-2-pyridyloxy acetic acid;
4-(1,2-Dimethyl-N-propyl amino)-2-ethyl amino-6-methyl thio-S-triazine;
2-[4,5-dihydro 4-methyl-4-(1-methyl ethyl)-5-oxo-1 H-imidazoyl-2yl-3-pyridinecarboxylic acid;
2-[3,5-dichlorophenyl)-2-(2,2,2-trichloroethyl) oxinane;
butyl-9-hydro-fluorene-(9)-carboxylate;
2-[1-(ethoxy imino) butyl]-3-hydroxy-5-(2H-tetra hydro thiopyran-3-yl)-2-cyclohexene-ione;
2-(2 chlorophenyl) methyl-4,4-dimethyl-3-iso oxazolidinone;
- phosphates:: 0-ethyl-0-(3-methyl-6-nitro phenyl) N-sec-butyl phosphoro thio amidate.

Typical fungicides include (See Agricultural Chemicals, Book IV, Fungicides, 1989 Revision, W.T. Thomson, Thomson Publications, Fresno, CA 93791):
- organic compounds:: 2,5-dimethyl-N-cyclohexyl-N-methoxy-3-furan carboxamide;
5-ethoxy-3-trichloromethyl-1,2,4-thiadiazole;
3-(2-methyl piperidino) propyl 3,4-dichlorobenzoate;
N,N'-(1,4-piperazinediyl bis (2,2,2-trichloro) ethylidene) bis formamide;
tetramethyl thiuram disulfide;
0-Ethyl-S,S,diphenyl-dithiophosphate;
5,10-dihydro-5,10-dioxo naphtho (2,3,9)-p-dithiin-2,3-dicarbo-nitrile;
2-(thiocyano methyl thio) benzothiazole;
α-2-(4-chlorophenyl) ethyl]-α-(1,1-dimethyl ethyl)-1 H-1,2,4-triazole-1-ethanol;
- morpholines:: N-tridecyl-2,6-dimethyl morpholine;
4-N-dodecyl-2,6-dimethyl morpholine.

Typical fumigants, growth regulators, repellants, and rodenticides include (See Agricultural Chemicals, Book III, Fumigants, 1988-1989 Revision, W.T. Thomson, Thomson Publications, Fresno, CA 93791):
- growth regulants:: 1,2 Dihydro-6-ethoxy-2,2,4-trimethylquinoline;
(2-chloroethyl) phosphoric acid;
4-[acetamino) methyl]-2-chloro-N (2,6-diethyl phenyl acetamide;
Benzoic acid, 3,6 dichloro-2-methoxy, 2-ethoxy-1-methyl-2-oxo ethyl ester;
- repellants: 0,0-dimethyl-0-[(4-methyl thio)-m-tolyl] phosphorothioate;
tertiary butyl-sulfonyl dimethyl dithio carbamate;
- seed softener:: 2-chloro-6-(trichlomethyl) pyridine;
5-ethoxy-3-trichloromethyl-1,2,4-thiadiazole;
N-phenyl-N'-1,2,3-thiadiazol-5-yl urea.

Pesticides may be characterized by their physical properties, depending on their physical state at normal or ambient conditions, i.e., between 4.4° and 32.2°C (40° and 90°F) and their solubility or miscibility with water or other common organic solvents, e.g., aromatics, such as, toluene, xylene, methylated and polyalkylated naphthalenes, and aliphatic solvents.

Based on the physical properties, the pesticides may be classified into two groups. The first group includes those which are oily liquids at ambient temperatures and are immiscible with water. Specific pesticides include:
Common esters of 2,4-dichlorophenoxyacetic acid,
Common esters of 2,4,5-trichlorophenoxyacetic acid,
Common esters of 2-(2,4-dichlorophenoxy) propionic acid,
Common esters of 2-(2,4,5-trichlorophenoxy) propionic acid,
Common esters of 2,4-dichlorobutyric acid,
Common esters of 2,methoxy-3,6-dichlorobenzoic acid,
Common esters of 2-methyl-4-chlorophenoxyacetic acid,
Piperonyl butoxide 3,4-methylenedioxy-6-propyl benzyl n-butyl diethylene glycol ether,
Bromophos ethyl: 0,0-diethyl-0-2,5-dichloro-4-bromophenyl thionophosphate,
N-(2-mercaptoethyl) benzene-sulfonamide (BETASAN®),
Isobornyl Thiocyanoacetate (Thanite®),
Ioxynil ester of octanoic acid,
Molinate S-ethyl hexahydro - 1 H - azepine-1-carbothioate,
PP 511 0,0-dimethyl-(2-diethylamine 4-methyl-6-pyrimidinyl) carbamate,
PP 211 0,0-diethyl O-(2-diethylamine-4-methyl-6-pyrimidinyl) phosphorocarbamate,
5-Ethoxy-3-(trichlorometyl)-1,2,4-thiadiazole (TERRAZALE®),
Ethyl-s-s-dipropyl-phosphodithioate (MOCAP®),
S-Ethyl dipropylthiocarbamate (EPTAM®),
S-Ethyl diisobutylthiocarbamate (SUTAN®),
S-n. propyl-di-n-propylthiocarbamate (VERNAM®),
S-propyl butylethylthiocarbamatae (TILLAM®),
S-ethyl ethylcyclohexylthiocarbamate (RO-NEET®),
Malathion (S-(1,2-dicarboxyethyl)-0,0-dimethyl phosphorodithioate),
Diazinon (0,0-diethyl,0-(2-isopropyl-4-methyl-6-pyrimidinyl) phosphorothioate,
O-Ethyl-S-phenyl-ethylphosphonodithioate (DYFONATE®), Toxaphene (Octachlorocamphene),
Bromoxynil (3,5-dibromo-4-hydroxy benzonitrile ester of n.octanoic acid,
2-chloro-N-2,6-diethylphenyl-N-methoxymethylacetamide (LASSO®),
Diallate S-2,3-dichloroallyl N,N-diisopropylthiolcarbamate,
Triallate S-2,33-trichloroallyl N,N-diisopropylthiolcarbamate.

The second group comprises those pesticides which are solids at ambient temperatures and for all practical purposes, insoluble in water.
2,4,5-T (2,4,5-trichlorophenoxy acetic acid)
Monuron (3-(p-chlorophenyl)-1,1-dimethyl urea)
Diuron (3-(3,4-dichlorophenyl)-1,1-dimethyl urea)
Bromacil (5 bromo-3-sec. butyl-6-methyl uracil)
Isocil (5 bromo-3-isopropyl-6-methyl uracil)
Linuron (3-(3,4 dichlorophenyl)-1-methoxy-1 methyl urea
Atrazine (2-chloro-4-ethylamino-6 isopropylamino-s-triazine) Simazine (2-chloro-4,6,-bis (ethylamino)-s-triazine
Dodine (n-dodecylguanidine acetate)
Thiram (tetramethylthiuram disulfide)
N-(mercaptomethyl)phthalimide s-(o,o dimethylphosphorodithioate) (IMIDAN®)
Lindane (gamma 1,2,3,4,5,6 hexachlorocyclohexane)
Folpet (N-trichloromethylphthalimide)
Manazon (s-(4,6-diamino-1,3,5-triazin-2yl methyl)dimethyl phosphorothiolthionate)
Barban (4-chloro-2 butynyl m-chlorocarbanilate)
Tricumba 2-methoxy-3,5,6-trichlorobenzoic acid
Trifluralin (2,6-dinitro-N,N-dipropyl-4-trifluoromethylamiline) (2,3 dihydro-5-carboxanilido-6-methyl-1,4-oxathiin) (VITAVAX®)
2,4-dichlorophenoxyacetic acid
4-(4-chloro-2 methylphenoxy) butyric acid
2-(2,4-dichlorophenoxy) propionic acid
Ioxynil: 3,5 diiodo-4-hydroxybenzonitrile
Bromoxynil: 3,5 dibromo-4-hydroxybenzonitrile
Methoxychlor: 2,2,-Bis(p-methoxyphenyl)-1,1-trichloroethane
PP 781: 4(2-chloro phenylhydrazono)-3-methyl-5-isoxazolone*
PP 675: 5-butyl-2-dimethylamino-4-hydroxy-6-methyl pyrimidine*
PP 062: 5,6-dimethyl-2-dimethylamino-4 pyrimidinyl dimethylcarbamate*
PP 149: 5-n-butyl-2 ethylamino-4-hydroxy-6 methylpyrimidine*
C 6313 N'-(4-bromo-3-chlorophenyl)-N-methoxy-N-methylurea
C 6989 2,4'dinitro-4-trifluoromethyl-diphenylether
Chloroxuron N'-4-(chlorophenoxy) phenyl-NN-dimethylurea
Dichlobenil 2,6-dichlorobenzonitrile
Diphenamid NN-dimethyl-2,2-diphenylacetamide
Fenac 2,3,6-trichlorophenylacetic acid
Fluometuron N'-(3-trifluoromethylphenyl)-NN-dimethylurea
GS 14260 4-ethylamino-2-methylthio-6-t-butyl-amino-1,3,5-triazine
PCP Pentachlorophenol
Lenacil 3-cyclohexyl-6,7-dihydro-1H-cyclo-pentapyrimidine-2,4-(3H,5H)-dione
Pyrazon 5-amino-4-chloro-2-phenyl-3-pyridazone
Metrobromuron N'-(4-bromophenyl)-N-methoxy-N-methylurea
Metoxymarc N-(4-methoxybenzoyl)-N-(3,4-dichlorophenyl)-N',N'-dimethylurea
Neburon N-butyl-N'-(3,4-dichlorophenyl-N-methylurea
NIA 11092 1,1-dimethyl-3-[3-(n-t-butyl carbamyloxy)phenyl] urea
Mecoprop 2-(4-chloro-2 methylphenoxy)propionic acid
Monolinuron N'-(4-chlorophenyl)-N-methoxy-N-methylurea
Nitrofen 2,4-dichlorophenyl 4-nitrophenylether
Propanil N-(3,4-dichlororphenyl)propionamide
Pyriclor 2,3,5-trichloro-4-pyridinol
Solan 3'-chloro-2-methyl-p-valerotoluidide
Terbacil 5-chloro-3-t-butyl-6-methyluracil
UC 22463 (SIRMATE)-3,4-dichlorobenzyl N-methylcarbamate
WL 9385 2-Azido-4-ethylamino-6-t-butylamino-s-triazine
Propachlor 2-chloro-N-isopropylacetanilide
CP 50144 2-chloro-N-2,6-diethylphenyl-N-methoxymethylacetamide
CP 31675 2-chloro-N-(2 methyl-6-t-butylphenyl)acetamide
Cypromid 3',4'-dichlorocyclopropane carboxanilide
Fenuron NN-dimethyl-N-phenylurea
Chlorbromuron N'-(4-bromo-3-chlorophenyl)-N-methoxy-N-methylurea
Ametryne 2-methylmercapto-4-ethylamino-6-isopropyl-amino-s-triazine
Prometryne 2-methylmercapto-4,6-bisisopropyl amino-s-triazine
DCPA dimethyl 2,3,5,6, tetrachloroterephthalate
Benefin N-butyl-N-ethyl-2,2,2-trifluoro-2,6-dinitro-p-toluidine
Nitralin 2,6-dinitro-4-methylsulfonyl-NN-dipropyl-aniline
PP 493 2,6-difluoro-3,5-dichloro-4-hydroxy pyridine
CNP 2,4,6-trichlorophenyl-4'-nitrophenyl ether
Pentachloro nitrobenzene
1-(butyl carbamoyl)-2-benzimidazole carbamic acid, methyl ester (BENLATE®) which normally exhibit instability when added to water due to hydrolysis.
* Manufactured by Imperial Chemical Industries Limited

Typical water unstable insecticides include carbamate esters, amides, phosphate esters, thiocarbamates, thiophosphate esters or esters of thiophosphates. These include Carbaryl, Aminocarb, alphacypermethrin, Resmethrin, Allethrin, Diflubenzuron, Dicrotophos, Profenofos, Azinphos-methyl, Methfuroxam, Procymidone, Fthalide, Nitrothal-isopropyl, Tolclofos-methyl, Pyrazophos, Chloropropham, EPTC, DPX-L5300, DPX-F 5384, and Naptalam. (Detailed descriptions of each of these chemicals are set forth in Agricultural Chemical Books I,II, III, and IV, Insecticides, 1989; Herbicides, 1986-1987; Fumigants and Growth Regulators, 1988; Revision by W.T. Thomson, Thomson Publications.)

Preferred lactams suitable for use in the invention are alkyl pyrrolidones having the formula: 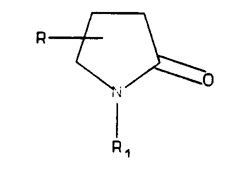 wherein R is hydrogen or linear or branched alkyl having from 1 to 16 carbon atoms and R₁ is linear or branched alkyl having from 1 to 16 carbon atoms, with the provision that the sum of number of carbon atoms in R and R₁ must be less than or equal to 16.

Preferred lactams are those wherein R is hydrogen and R₁ is methyl, ethyl, butyl, octyl, or iso-octyl. Of these, particularly preferred are N-methyl pyrrolidone, N-octyl pyrrolidone, and N-isooctylpyrrolidone.

The method of preparing the composition of the invention involves merely admixing the ingredients. Normally, it is best to first add the agriculturally active compound to the lactam component and then admix the surfactant. The water is normally added after the first three ingredients are mixed. However, there is no particular criticality to the sequence of addition and mixing.

Surfactants suitable for use in the inventive composition include ethoxylated alkyl phenols, linear aliphatic polyesters, linear aromatic polyesters, polyalkenyloxyalcohol, linear aliphatic ethoxylates, polyethoxylated castor oil, polyethoxylated carboxylates, and polyethoxylated alkylamines. Anionic surfactants may be used as the emulsifier and include phosphate esters and their salts, alkyl sulfates, sulfonates, and their salts, salts of sulfated nonylphenoxypoly(ethyleneoxy) ethanol, salts of alkylbenzene sulfonates, salts of alkylnaphthalene sulfonate, and sulfonated aliphatic polyesters and their salts. Also suitable are complex phosphate esters of nonionic surfactants of the ethylene oxide type which are mixtures of diesters of phosphoric acid. (See, for example, NcCutcheon's, Emulsifiers and Detergents (1989), published by NcCutcheon's Division of M.C. Publishing Co., Glen Rock, New Jersey.)

Suitable hydrophobic buffering acids for use in the present invention are those which produce a buffering effect on the composition so as to inhibit the hydrolysis or deterioration of the AAC and yet not deleteriously affect its intended performance or the state of the microemulsion. Typical are hydrophobic acids having a pKₐ of from about 2 to 5. These include nonylphenyl ethoxylated phosphoric acid with an ethylene oxide unit content, i.e, -O-CH₂CH₂ units (hereinafter referred to as EO units) of from 3 to 18 of which Gafac RE 610 is an example, R₂COOH wherein R₂ is alkyl containing from 7 to 17 carbon atoms and which may contain from about 1 to 10 EO units, 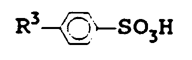 wherein R³ is alkyl containing from 8 to 18 carbon atoms and which may contain from about 1 to 10 EO units, R⁴-SO₃H wherein R⁴ is alkyl containing from 8 to 18 carbon atoms and which may contain from about 1 to 10 EO units, R⁵OSO₃H wherein R⁵ is an alkyl group containing from 8 to 18 carbon atoms, and which may contain from about 1 to 10 EO units.

Suitable polyhydric alcohols for use in the present invention are glycerol, pentaerythritol, mannitol, and sorbitol. The amount of the polyhydric alcohol is that which is sufficient to provide cold temperature stability but not deleteriously affect its intended performance. More specifically, the amount of the polyhydric alcohol may be in the range from about 1 to 50 percent by weight, preferably, 2 to 20 percent, and most preferably, 2 to 5 percent by weight based on the total weight of the mixture in the end use formulation.

More specifically, the hydrophobic acid may be present in an amount from about 0.01 to 20 percent by weight, preferably, 0.002 to 10 percent, and most preferably, 0.05 to 1.0 percent by weight, based on the total weight of the mixture in the end use formulation. The amount of hydrophobic acid in the concentrate can be from about 0.05 to 25 percent by weight.

The specific components as well as their amounts in the inventive composition may be revised over a wide range within the definitions given above, and are limited only in that the final product, upon dilution, must form the microemulsion of the invention.

The AAC concentration should be as high as possible so long as it does not precipitate upon dilution of the concentrate with at least 80% weight water for a reasonable period of time and achieves the desired effect. Precipitation (crystal formation) on standing not only depletes the amount of AAC in solution, it can also lead to fouling of application equipment, i.e., sprayers, etc.

With the present invention, it is possible to obtain concentrates with AAC concentrations in excess of 4 weight percent, generally in excess of 5 weight percent, which form a stable, transparant microemulsion upon being diluted with water. Depending on the particular AAC, the concentration of the AAC in the concentrate is from about 4 to 25%, or 5 to 25% based on the total weight of the composition before dilution.

Generally, the amount of surfactant is from about 1 to 50% based on the total weight of the composition. Normally, the amount of surfactant will depend on the amount of AAC. A preferred ratio of AAC to surfactant is from about 1:0.3 to 1:10.

The final use concentration of the AAC, i.e., after dilution, depends on the particular AAC. However, it is important that upon dilution, the diluted form remain stable for a time period sufficient to allow it to be applied. This, of course, will vary with the schedule for the application in the field or end user. A preferred end-use microemulsion composition in accordance with the invention comprises from about 0.005 to 1 weight percent of the AAC, from about 1 to 15 weight percent of the lactam, from about 0.01 to 10 weight percent of the surfactant (s), and the remainder water. With the microemulsion of the invention, prolonged stability is obtained, and formulations in a ready-to-use format can be provided for consumer use. Conventional adjuvants may also be added to the composition, e.g., film forming polymers, i.e., polyvinylpyrrolidone, viscosity modifiers, and the like, so long as they do not destroy or adversely affect the microemulsive state.

The following examples and comparative examples illustrate the present invention*:
* In the examples, all compositional percentages are percent by weight of the total composition unless otherwise indicated.

### Experimental Procedure:

### A. Formulations:

Formulations were prepared by weighing and mixing the exact proportions of the ingredients. Typically 100 g samples of the water-based formulations were prepared for each evaluation in 4 oz. stoppered bottles. When a lactam was used in accordance with this invention the AAC was dissolved completely in the measured quantity of the lactam. The surfactant(s) was added to the AAC or to the solution of the AAC in the lactam (if a lactam was used). The contents were mixed in an automatic orbital shaker until the AAC dissolved completely or the mixture became homogeneous. Normally, this took about thirty minutes. A concentrate was then obtained which was either diluted immediately or stored. In those instances where the concentrate was stored for a period of time from 4 hours to two weeks and then diluted with water, this fact is indicated in the tabular results.

The water-based microemulsions were prepared by adding the required quantity of the concentrate to water. The dilution water was either deionized water or World Health organization (WHO) standard hard water of hardness of 342 ppm expressed as CaCO3 equivalent.

### B. Evaluation of Stability

The samples were visually examined for clarity, precipitation, and separation or turbidity at ambient temperatures. Stable formulations were observed for as long as six months. The formulations were considered stable if they remained clear by visual observation for more than 4 days. Formulations that became cloudy or separated within 24 hours were considered unstable. However, certain AAC's are known to be unstable under certain conditions, for example, they may hydrolyze in water, e.g., Hydramethylnon, Carbaryl, and the like. Accordingly, stability of the microemulsion for such an AAC must be judged using a different standard from AAC's which are not subject to such chemical instability. Generally, for such a compound, stability of four hours is considered satisfactory since the diluted material would as a practical matter have to be used shortly after dilution. In these instances, we have found indications that the microemulsion according to the invention increase the chemical stability of the AAC. Promising formulations were evaluated for stability at lower and higher temperatures in the range from 10°C through 45°C. Samples were stored at fixed temperatures of 10°C through 45°C and were observed visually as a function of time.

In a few cases, the clarity was also measured instrumentally and expressed as NTU (Nephelometric turbidity units) using a Hach Ratio Turbidimeter. Samples with values ≤50 NTU were considered visually clear.

In the following tables, the last recorded visual observation represents the last time period that a visual observation was made, e.g., if the last observation shown is for the two week period, no further observations were made for that run.

### EXAMPLE I

### A. Determination of Solubilities of AAC

A weighed quantity of the AAC was stirred with 10 g of the chosen solvent in an automatic orbital shaker for 30 minutes, starting with 0.1-1 g of AAC, depending upon its solubility. Incremental amounts of AAC (0.1 g) were added until there was no dissolution after 30 minutes stirring. The highest limit of solubility was thus obtained. Incremental amounts of solvents (0.1 g) were then added until a solution was formed; the lower end of solubility was thereby obtained. All determinations were made at ambient conditions -20 -25°C. Results from these tests are shown in Table 9.

### RESULTS AND DISCUSSION

Solubilities of carbaryl (1-naphthyl-N-methylcarbamate) in N-alkylpyrrolidones as well as four other solvents are shown in Table 9.

**TABLE 1**

| SOLUBILITY OF CARBARYL (%) | |
|---|---|
| SOLVENT | SOLUBILITY |
| N-methylpyrrolidone | 45-49 |
| N-octylpyrrolidone | 24-30 |
| N-dodecylpyrrolidone | 16-20 |
| Aromatic Petroleum Oil (Exxon 200) | 1-3 |
| N-Octanol | <1 |
| Hexanol | 2-3 |
| *DMF | 40-45 |
| *DMSO | 40-45 |
| *Acetone | 20-30 |
| *Cyclohexanone | 20-25 |
| *IPA | 10 |
| *Xylene | 10 |
| *Ethanol | >20 |
| *Water | 0.012 (30°C) |

| | |
|---|---|
| All measurements made at 25°C unless otherwise specified. For * see "The Agrochemical Handbook", 2nd Ed. Royal Soc. of Chem., The University of Nottingham NG72RD, England (1987). | |

### EXAMPLE II

### Stable Microemulsion for Carbaryl

Since carbaryl is a well-known active ingredient, both physical and chemical stability of the microemulsion of the composition of Table 2 was monitored.

**TABLE 2**

| STARTING FORMULATIONS OF WATER-BASED END-USE MICROEMULSIONS, % COMPOSITION RESULTS | |
|---|---|
| N-octylpyrrolidone | 5 |
| SDS | 2 |
| N-methylpyrrolidone | 0 |
| Carbaryl | 0.3 |
| Permethrin | 0 |
| KH₂PO₄ | 0 |
| Gafac RE610 (ethoxylated phosphate ester) | 0 |
| Deionized water qs | 100% |

| Results | |
|---|---|
| pH at time 0-1 hr. | 9.3 |

| Time, observation at ambient conditions: | |
|---|---|
| 0 time: | clear |
| 1 day: | clear |
| 4 days: | clear |
| 1 week: | clear, colorless |
| 2 weeks: | clear, colorless |
| 8 weeks: | clear, colored |
| 3 months: | clear, colored |
| 6 months: | colored, fine separation |

The pH of this formulation (Table 2) was monitored with time. The UV spectra of solutions at -30 ppm AAC in EtOH prepared by appropriate dilution of the formulation (1/100) with ethanol was obtained as a function of time. The change in UV absorption was used to determine the decrease in carbaryl concentration based on a calibration curve previously obtained.

16 percent loss was noticed in 40 days via UV spectra data. The pH of the formulation was also alkaline throughout the duration. A drop in pH from 9.27 to 7.4 (40 days) was observed. The formulation further deteriorated on standing beyond 40 days.

Since carbaryl is known to hydrolyze in alkaline medium (see the Agrochemical Handbook), the formulation was buffered by the addition of the appropriate quantity of KH₂PO₄.

The buffered formulation, buffered at pH = 6, did not show any decay in the UV absorbance at λ max = 279 nm observed after a period of 30 days. However, tiny crystals of carbaryl stared separating on the 11th day. Microscopic examination showed tiny needles, 50 microns long.

The original formulation was buffered by adding a trace of Gafac RE-610 (<0.1 g to 100 g of formulation) instead of KH₂PO₄ to bring the pH to 6. The resulting formulation was found stable for 120 days without any separation of crystals, and showed no appreciable decay in the UV absorbance.

Figs. 1, 2 and 3 show microphotographs at 250x of a droplet from the formulation without buffering, the formulation buffered with KH₂PO₄, and the formulation buffered with Gafac RE-610, respectively, after 131 days.

As shown, a substantial reduction in crystal formation was observed with the system buffered with the hydrophobic buffering agent.

### Example III

A series of microemulsions and concentrates having the composition shown in Table 3 was prepared. Each of the compositions was identical except for the amount of glycerol present. Formulation No. 1 was unstable at 2-3°C. In contrast, formulations No. 2 and # 3 were observed to be clear from precipitation for six months at 2-3°C. No substantial difference in stability at storage up to 35°C was observed.

Formulations 2, 3, and 4 showed no precipitation when stored at 2 - 3°C for six months. Formulation 1 produced crystals in less than 48 hours at 2 - 3°C. Cold stability was not observed when propylene glycol, butanol, butene diol and isopropanol were substituted for glycerol.

**TABLE 3**

| MICROEMULSION COMPOSITIONS | | | | |
|---|---|---|---|---|
| Active Ingredients | Run No. | | | |
| | 1 | 2 | 3 | 4 |
| D-Allethrin | 0.05 | 0.05 | 0.05 | 0.05 |
| Tetramethrin | 0.20 | 0.20 | 0.20 | 0.15 |
| Permethrin | 0.15 | 0.15 | 0.15 | 0.20 |
| Piperonyl Butoxide | 0.9 | 0.9 | 0.9 | 0.9 |

| Lactams | | | | |
|---|---|---|---|---|
| N-methylpyrrolidone | 5.0 | 5.0 | 5.0 | 5.0 |
| N-octylpyrrolidone | 0.625 | 0.625 | 0.625 | 0.625 |

| Surfactants | | | | |
|---|---|---|---|---|
| Igepal CO 630 | 3.75 | 3.75 | 3.75 | 3.75 |
| Pegol L 31 | 0.625 | 0.625 | 0.625 | 0.625 |

| Stabilizing Agent: | | | | |
|---|---|---|---|---|
| Glycerol | 0 | 2.0 | 5.0 | 10.0 |
| diluted to 100% with water | | | | |

## Claims

1. A stable microemulsion composition comprising:
(a) a water insoluble or immiscible agriculturally active ingredient;
(b) a surfactant;
(c) a lactam having the formula: 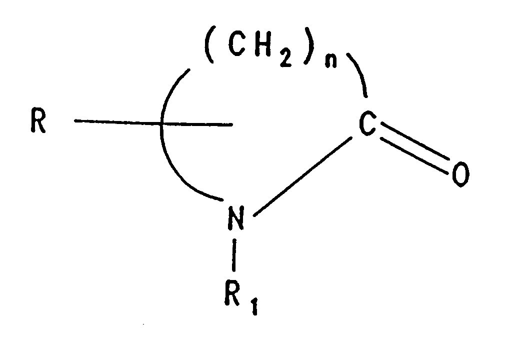 wherein R is hydrogen or a branched or straight-chained alkyl having from 1 to 16 carbon atoms, R₁ is a branched or straight chained alkyl having from 1 to 16 carbon atoms, the sum of the carbon atoms in R and R₁ being less than or equal to 16;
(d) at least about 80% by weight water; and
(e) an amount of glycerol, pentaerythritol, mannitol or sorbitol effective to enhance cold temperature stability and/or in the case that (a) is unstable to hydrolysis, a buffering amount of a hydrophobic buffering acid.

2. The composition of claim 1 wherein the hydrophobic acid is present in an amount which is at least 0.01 percent by weight.

3. The composition of claim 1 or claim 2, wherein the hydrophobic acid has a pKₐ of from 2 to 5.

4. The composition of claim 1, claim 2 or claim 3 wherein the glycerol, pentaerythritol, mannitol or sorbitol is present in an amount which is at least 2 percent by weight.

5. The composition of any one of the preceding claims wherein the concentration of component (a) is in excess of 5 weight percent based on the total weight of components (a), (b), (c) and (e).

6. The composition of any one of claims 1 to 4 wherein the concentration of component (a) is in the range from 5 to 25 percent by weight based on the total weight of components (a), (b), (c) and (e).

7. The composition of any one of the preceding claims wherein the amount of component (b) is from 1 to 50% by weight based on the total weight of components (a), (b), (c) and (e).

8. The composition of any one of the preceding claims wherein the ratio of component (a) to component (b) is from 1:0.3 to 1:10.

9. The composition of any one of the preceding claims wherein the agriculturally active ingredient is a cyclo compound, carbamate, synthetic pyrethroid, diphenyl compound, non-phosphate, organic phosphate, thiophosphate or dithiophosphate.

10. The composition of claim 9 wherein the agriculturally active compound is 1-naphthyl-N-carbamate.

11. The composition of any one of the preceding claims wherein R is hydrogen and R₁ is methyl, ethyl, butyl, octyl, iso-octyl or dodecyl.

12. The composition of any one of the preceding claims wherein the lactam is N-methyl pyrrolidone, N-octyl pyrrolidone, N-iso-octyl pyrrolidone, or dodecyl pyrrolidone.

13. The composition of any one of the preceding claims wherein the lactam is a mixture of lactam wherein R₁ has from 1 to 4 carbon atoms and lactam wherein R₁ has more than 4 carbon atoms.

14. A method for treating crops or controlling pests comprising contacting the crops or pests with the microemulsion of any one of the preceding claims.

## Patentansprüche

1. Stabile Mikroemulsions-Zusammensetzung, umfassend:
(a) einen wasserunlöslichen oder damit nicht mischbaren, in der Landwirtschaft wirksamen Bestandteil;
(b) ein Tensid;
(c) ein Lactam der Formel: 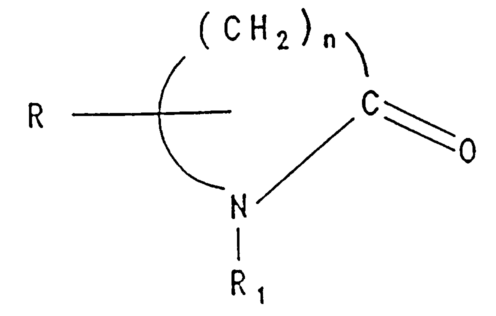 worin R Wasserstoff oder verzweigtes oder unverzweigtes Alkyl mit 1 bis 16 Kohlenstoffatomen ist, R₁ verzweigtes oder unverzweigtes Alkyl mit 1 bis 16 Kohlenstoffatomen ist, wobei die Summe der Kohlenstoffatome in R und R₁ ≤ 16 ist;
(d) zumindest etwa 80 Gew.-% Wasser; und
(e) eine Menge an Glycerin, Pentaerythrit, Mannit oder Sorbit, die wirksam die Stabilität bei niedrigen Temperaturen erhöht, und/oder eine als Puffer wirksame Menge einer hydrophoben Puffersäure, für den Fall, daß (a) hydrolyseanfällig ist.

2. Zusammensetzung nach Anspruch 1 , worin die hydrophobe Säure in einer Menge von zumindest 0,01 Gew.-% enthalten ist.

3. Zusammensetzung nach Anspruch 1 oder 2, worin die hydrophobe Säure einen pKₐ von 2 bis 5 aufweist.

4. Zusammensetzung nach Anspruch 1, 2 oder 3, worin das Glycerin, Pentaerythrit, Mannit oder Sorbit in einer Menge von zumindest 2 Gew.-% enthalten ist.

5. Zusammensetzung nach einem der vorangegangenen Ansprüche, worin die Konzentration von Komponente (a), bezogen auf das Gesamtgewicht der Komponenten (a), (b), (c) und (e), über 5 Gew.-% liegt.

6. Zusammensetzung nach einem der Ansprüche 1 bis 4, worin die Konzentration von Komponente (a), bezogen auf das Gesamtgewicht der Komponenten (a), (b), (c) und (e), im Bereich von 5 bis 25 Gew.-% liegt.

7. Zusammensetzung nach einem der vorangegangenen Ansprüche, worin die Konzentration von Komponente (b), bezogen auf das Gesamtgewicht der Komponenten (a), (b), (c) und (e), 1 bis 50 Gew.-% beträgt.

8. Zusammensetzung nach einem der vorangegangenen Ansprüche, worin das Verhältnis von Komponente (a) zu Komponente (b) 1:0,3 bis 1:10 beträgt.

9. Zusammensetzung nach einem der vorangegangenen Ansprüche, worin der in der Landwirtschaft wirksame Bestandteil ein(e) Cycloverbindung, Carbamat, synthetisches Pyrethroid, Diphenylverbindung, Nicht-Phosphat, organisches Phosphat, Thiophosphat oder Dithiophosphat ist.

10. Zusammensetzung nach Anspruch 9, worin die in der Landwirtschaft wirksame Verbindung 1-Naphthyl-N-carbamat ist.

11. Zusammensetzung nach einem der vorangegangenen Ansprüche, worin R Wasserstoff ist und R₁ Methyl, Ethyl, Butyl, Octyl, Isooctyl oder Dodecyl ist.

12. Zusammensetzung nach einem der vorangegangenen Ansprüche, worin das Lactam N-Methylpyrrolidon, N-Octylpyrrolidon, N-Isooctylpyrrolidon oder Dodecylpyrrolidon ist.

13. Zusammensetzung nach einem der vorangegangenen Ansprüche, worin das Lactam ein Gemisch aus Lactam, worin R₁ 1 bis 4 Kohlenstoffatome aufweist, und Lactam, worin R₁ mehr als 4 Kohlenstoffatome aufweist, ist.

14. Verfahren zur Behandlung von Pflanzen oder Früchten oder zur Schädlingsbekämpfung, umfassend das In-Kontakt-Bringen der Pflanzen, Früchte oder Schädlinge mit der Mikroemulsion nach einem der vorangegangenen Ansprüche.

## Revendications

1. Composition de microémulsion stable comprenant :
(a) un ingrédient agricolement actif non miscible ou insoluble dans l'eau;
(b) un surfactant;
(c) un lactame ayant la formule : 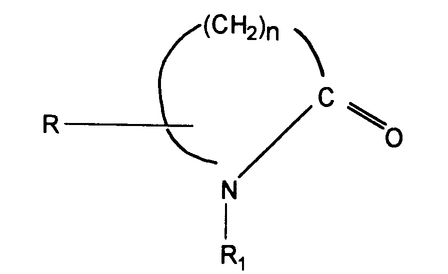 où R est un hydrogène ou un alkyl e à chaîne linéaire ou ramifiée ayant de 1 a 16 atomes de carbone, R₁ est un alkyle a chaîne linéaire ou ramifiée ayant de 1 à 7 atomes de carbone, la somme des atomes de carbone dans R et R₁ étant inférieure ou égale a 16;
(d) au moins environ 80% en poids d'eau; et
(e) une quantité de glycérol, pentaérythritol, mannitol ou sorbitol efficace pour augmenter la stabilité aux températures froides et/ou dans le cas où (a) est instable envers une hydrolyse, une quantité tampon d'un acide tampon hydrophobe.

2. Composition selon la revendication 1 dans laquelle l'acide hydrophobe est présent en une quantité qui est d'au moins 0,01 pour cent en poids.

3. Composition selon la revendication 1 ou la revendication 2, où l'acide hydrophobe a un pKₐ de 2 à 5.

4. Composition selon la revendication 1, la revendication 2 ou la revendication 3 dans laquelle le glycérol, le pentaérythritol, le mannitol ou le sorbitol est présent en une quantité qui est d'au moins 2 pour cent en poids.

5. Composition selon l'une quelconque des revendications précédentes dans laquelle la concentration du composant (a) est en excès de 5 pour cent en poids sur la base du poids total des composants (a), (b), (c) et (e).

6. Composition selon l'une quelconque des revendications 1 à 4 dans laquelle la concentration du composant (a) est dans l'intervalle de 5 à 25 pour cent en poids sur la base du poids total des composants (a), (b), (c) et (e).

7. Composition selon l'une quelconque des revendications précédentes dans laquelle la quantité du composant (b) est de 1 à 50% en poids sur la base du poids total du composant (a), (b), (c) et (e).

8. Composition selon l'une quelconque des revendications précédentes dans laquelle le rapport du composant (a) au composant (b) est de 1:0,3 à 1:10.

9. Composition selon l'une quelconque des revendications précédentes dans laquelle l'ingrédient agricolement actif est un composé cyclo, un carbamate, un pyréthroide synthétique, un composé diphényle, un non-phosphate, un phosphate organique, un thiophosphate ou un dithiophosphate.

10. Composition selon la revendication 9 où le composé agricolement actif est le 1-naphthyl-N-carbamate.

11. Composition selon l'une quelconque des revendications précédentes dans laquelle R est un hydrogène et R₁ est un méthyle, un éthyle, un butyle, un octyle, un iso-octyle ou un dodécyle.

12. Composition selon l'une quelconque des revendications précédentes dans laquelle le lactame est la N-méthyl pyrrolidone, la N-octyl pyrrolidone, la N-iso-octyl pyrrolidone, ou la dodécyl pyrrolidone.

13. Composition selon l'une quelconque des revendications précédentes dans laquelle le lactame est un mélange d'un lactame dans lequel R₁ a de 1 à 4 atomes de carbone et d'un lactame dans lequel R₁ a plus de 4 atomes de carbone.

14. Méthode pour traiter les récoltes ou contrôler les nuisibles comprenant la mise en contact des récoltes ou des nuisibles avec la microémulsion selon l'une quelconque des revendications précédentes.
